# EUROPEAN PATENT SPECIFICATION

(11) **EP 1 986 166 B1**
(45) Date of publication and mention of the grant of the patent: **23.06.2010**
(21) Application number: 08008073.2
(22) Date of filing: 25.04.2008
(51) Int. Cl.: G07F 11/22

(54) **Article dispensing device for automatic vending machine**
Artikelausgabevorrichtung für einen Verkaufsautomaten
Dispositif de distribution d'article pour distributeur automatique

(30) Priority: 25.04.2007 JP 2007116195
(43) Date of publication of application: 29.10.2008
(73) Proprietor: ASAHI SEIKO CO., LTD., Minato-ku Tokyo 107-0062 (JP)
(72) Inventor: Abe, Hiroshi, Saitama-shi Saitama (JP)
(74) Representative: Feldmeier, Jürgen

(56) References cited:
- FR-A- 2 723 656
- GB-A- 1 040 645
- GB-A- 2 326 872
- US-A- 5 439 136

## Description

The present invention relates to a small-sized article dispensing device for an automatic vending machine, the device dispensing stacked box-shaped bodies.

In particular, the present invention relates to a small-sized article dispensing device for an automatic vending machine, the device dispensing stacked box-shaped bodies by pushing them by a pusher.

Furthermore, the present invention relates to an article dispensing device for an automatic vending machine, the device allowing a stable dispense posture of a boxed-shaped body to be dispensed.

Still further, the present invention relates to a small-sized article dispensing device for an automatic vending machine, allowing placement of many such devices in the automatic vending machine.

As a first prior art, an article dispensing device for an automatic vending machine has been known, in which a pusher is caused to reciprocate by a spiral-groove-equipped shaft, thereby pushing the lowermost one of stacked box-shaped articles (for example, refer to First Patent Document).

As a second prior art, an article dispensing device for an automatic vending machine has been known, including: a pusher movably provided in forward and backward directions of a box-shaped chassis with its upper surface taken as a mount portion of package articles, the pusher pushing a package article at a lowermost position forward among package articles stacked on the chassis; a support arm provided so as to extend forward on an upper surface of the chassis to support the package article pushed forward by the pusher from downward and to tilt forward in accordance with the completion of the pushing operation by the pusher to dispense the package article; and a lifter that protrudes to the upper surface of the chassis in conjunction with the tilt of the support arm to support the next package article stacked on the above-mentioned package article from downward to prevent it from dropping off (for example, refer to Second Patent Document).

As a third prior art, an article dispensing device for an automatic vending machine has been known, in which articles accommodated in a direct loading scheme in which they are arranged in a vertical direction within an article passage of an article accommodation shelf are conveyed one by one from the lowermost based on a vending instruction, the device including: the article accommodation shelf that is formed of a box-shaped container with its lower surface open and has a passage enlarged portion obtained by enlarging the width of the article passage at a bottom end sideward within a range corresponding to the height of one article; a driving shaft that is positioned sideward of the article accommodation shelf and is driven for rotation by a bend motor; a pusher that faces the lowermost article and is retractably disposed at the article passage so as to be retracted from the accommodation passage in a standby state and to horizontally protrude to the article passage in conjunction with the rotation of the driving shaft at the time of a vending operation, the pusher, when protruding to the article passage at the time of the vending operation, pushing the lowermost article to the passage enlarged portion and protruding to the lower surface of an article second from the lowermost; and an article conveying flapper that closes an article exit of the article accommodation shelf and carries articles thereon in a direct loading scheme in the standby state, and conveys the lowermost article from the article exit by performing an open/close operation in conjunction with the rotation of the driving shaft at the time of a vending operation, wherein when the article conveying flapper is moved by a traverse cam to convey the lowermost article, the second article and thereafter are temporarily held by the pusher (for example, refer to Third Patent Document).

As a fourth prior art, an article dispensing device for an automatic vending machine has been known, in which a plurality of article shelves accommodating cylindrical articles in a horizontally-tilted state are provided in parallel, a feed rod with a spiral traverse grooved cam formed across an article delivery side of each article shelf is provided, a motor is provided that drives the rod for forward and backward rotations, an article conveying nail is slidably engaged with a groove of the rod, the article conveying nail is provided with a clutch that couples the article carrying nail with the feed rod at the time of forward rotation of the feed rod and releases the coupling between the article conveying nail and the feed rod at the time of a reverse rotation of the feed rod, and the article conveying nail reciprocates across the article shelves with the reverse rotation of the feed rod and delivers an article on the article shelf with a forward rotation of the feed rod (for example, refer to Fourth Patent Document).

Japanese Patent Application Laid-Open Publication No. 8-87670 (pp.2-7, Figs. 2-10)

Japanese Patent Application Laid-Open Publication No. 2006-146691 (pp.3-5, Figs. 3-7)

Japanese Patent No. 2636437 (pp.2-3, Figs. 1-2)

Japanese Patent Application Laid-Open Publication No. 6-80248 (pp.2-3, Figs. 1-2)

In the first prior art, an article is pushed by the pusher moved by the rotation of a so-called traverse cam.

Since the box-shaped articles on a bottom casing are stacked, the lowermost article has the overall weight of the articles mounted thereon.

With this, when the lowermost article is pushed, the upper surface of the lowermost article and the lower surface of an article that comes second thereon chafe against each other.

In particular, when an approximately maximum number of articles are stacked, friction between the upper surface and the lower surface is large, thereby possibly causing a flaw on the packages of the articles.

Also, since the second article is mounted on the lowermost article until the pushing of the lowermost article is completed, the lowermost article is discharged in a manner such that its tip is kicked upward.

With this, the article falls down while rotating. To prevent the article from being caught halfway through a passage wall to be inhibited from falling, the falling passage has to be formed with a margin, thereby restricting downsizing of the automatic vending machine.

In the second prior art, a package article is pushed by the pusher moved by a timing belt. With this pushing, a package article mounted on the lowermost package article is pushed up by the lifter, and the pushed package article is further supported from downside by the support arm plunged forward, thereby stabilizing the posture of the pushed package article and shortening the depth of the device and the automatic vending machine themselves.

However, in the second prior art, a driving device for the timing belt, a driving device for the pusher, and a driving device for the support arm are separately required, thereby making it impossible to downsize and also posing a problem of high price.

In the third prior art, the article conveying flap is moved by the traverse cam to control the dispensing of the articles.

In this configuration, the traverse cam is used only to rotate the article conveying flap for opening and closing the exit of the articles, and is not used to push and dispense an article.

Therefore, since only the lowermost article is fell, a pusher is required that temporarily holds the second article and thereafter, thereby making it impossible to downsize the device.

In the fourth prior art, at the time of reverse rotation of the feed rod formed of a traverse cam, the coupling between the article conveying nail and the feed rod is released by the clutch to move the article conveying nail along the feed rod to a position corresponding to a predetermined article shelf.

Thereafter, the feed rod is rotated forward to rotate the article conveying nail via the clutch to deliver the cylindrical article.

In this configuration, a plurality of different articles can be dispensed with the use of one motor. However, rotation for dispensing is performed after the article conveying nail is moved to the corresponding article shelf, thereby making it impossible to dispense quickly.

Since the article conveying nail is rotated by using the rotation of the feed rod, there is a problem of restricting articles capable of being dispensed to cylindrically-shaped ones.

GB 2 326 872 discloses a pusher moved pivotally in a reciprocating manner. The movement of the pusher is effected by a coin freed mechanism so that the pusher is moved to a position away from the article exit allowing a stack to drop on a base. The roller then provides an end abutment for the lowermost article in the stack. Afterwards, the pusher is moved towards the article exit which pushes the lowermost article from the stack. The pusher passes the same positions when it is moved towards the article exit and when it is moved away from the article exit.

GB 1,040,645 discloses an article dispensing device in which a linearly reciprocating ram is provided. Said ram is used to move pallets to a lifting platform.

US 5,439,136 discloses an article dispensing device with a pusher pushing forward the lowermost piece of merchandise into a merchandise stocker. The pusher is provided to a lever which is rotatably supported to a movement body. The movement body provides a shaft, which is engaged with a slot of the lever. The pusher passes the same positions when it is moved towards the article exit and when it is moved away from the article exit.

A first object of the present invention is to provide an article dispensing device for an automatic vending machine, the device preventing a flaw from occurring on the lowermost article due to chafing against the stacked article.

A second object of the present invention is to provide a small-sized article dispensing device for an automatic vending machine.

A third object of the present invention is to provide a small-sized article dispensing device for an automatic vending machine, the device capable of stabilizing the posture of an article to be dispensed.

A fourth object of the present invention is to provide a small-sized article dispensing device for an automatic vending machine, the device capable of quickly dispensing a plurality of articles with one motor.

To achieve these objects, the article dispensing device for the automatic vending machine according to the present invention is configured as follows.

The present invention is directed to an article dispensing device for an automatic vending machine, the device in which a side surface of a lowermost article of articles stacked on a base is pushed by a pusher to be dispensed, the pusher being formed of rollers, being caused by reciprocating means to linearly reciprocate and also being able to move between a standby position closer to the base than a thickness of an article and a pushing position away from the base farther than the thickness of the article, the pusher being held at the pushing position in a process of moving toward an article exit and causing an article second from lowermost to float with respect to the lowermost article.

The invention according to the claims is directed to an article dispensing device for an automatic vending machine, the device in which a side surface of a lowermost article of articles stacked on a base is pushed by a pusher to be dispensed, the pusher being formed of rollers and being provided to a lever rotatably supported to a movement body caused by reciprocating means to linearly reciprocate, and the lever being held at a pushing position in a process of moving toward an article exit and causing an article second from lowermost to float with respect to the lowermost article and being held at a standby position closer to the base than the pushing position in a process of moving away from the article exit.

The invention according to the claims is directed to an article dispensing device for an automatic vending machine, the device in which a side surface of a lowermost article of articles stacked on a base is pushed by a pusher to be dispensed, the pusher being formed of rollers and being provided to a lever rotatably supported to a movement body that is guided by guide rails disposed in parallel to each other on the base so as to be able to linearly reciprocate, and the lever being held at a pushing position by a traverse cam device disposed in parallel to the guide rails in a process of moving toward an article exit and causing an article second from lowermost to float with respect to the lowermost article, the lever being held at a standby position closer to the base than the pushing position in a process of moving away from the article exit.

The invention according to the claims is characterized in that, in the article dispensing device for the automatic vending machine according to the claims, the lever is rocked by a moved body caused to reciprocate by a traverse cam shaft disposed in parallel to the guide rails, and also is link-coupled by link means to a driving lever rotatably mounted on the movement body.

The invention according to the claims is characterized in that, in the article dispensing device for the automatic vending machine according to the claims, the link coupling is made by movably inserting a moved pin integrally formed on the driving lever into a grooved cam formed on the moved body and the link coupling is made by movably inserting a driving pin integrally formed on the driving lever into a grooved cam formed on the lever.

The invention according to the claims is characterized in that, in the article dispensing device for the automatic vending machine according to the claims, forceful movement means is disposed on a movement path of the lever so as to make contact with the lever to push and forcefully move the lever to the pushing position.

The invention according to the claims is characterized in that, in the article dispensing device for the automatic vending machine according to the claims, the driven pin of the lever is inserted so as to have a relation in which the driven pin is drawn by the grooved cam.

The invention according to the claims is characterized in that, in the article dispensing device for the automatic vending machine according to the claims, the traverse cam device includes a pair of traverse cam shafts that are disposed on a same axial line and are coupled to a common driving device so as to be driven thereby.

The invention according to the claims is characterized in that, in the article dispensing device for the automatic vending machine according to the claims, one-way clutches are disposed in a driving mechanism between the driving device and each of the traverse cam shafts, the one-way clutches differ from each other in transfer rotating direction, and the driving device is selectively rotated in a forward or reverse direction based on a selected article.

In the invention according to the claims, the articles stacked on the base are pushed by the reciprocating pusher.

When pushing an article to an article exit, the pusher pushes the article by moving to a pushing position away from the base farther than the thickness of the article.

At this pushing position, the pusher pushes up the second article, thereby decreasing the load applied onto the lowermost article. As a result, a friction contact force is decreased (including zero).

Also, since the pusher is formed of rollers, when relatively moving to the second article, the pusher makes a rolling contact with the lower surface of the article.

Thus, a friction force between the lowermost article and the second article is decreased, thereby advantageously preventing a flaw on the surfaces of the articles due to chafing.

In particular, since the pusher moves while pushing an article, when the article is pushed, the load of the article stacked on the lowermost article does not act on the angle portion of the lowermost article.

Therefore, since no kicking force is applied to the article, the article can naturally fall down. Even with a minimum falling passage, the article is not clogged, thereby advantageously downsizing the automatic vending machine.

In the invention according to the claims, the articles stacked on the base are pushed by the pusher to be dispensed from the article exit.

The pusher is formed of rollers, and is rotatably mounted onto a lever rotatably provided to a movement body. The movement body is caused by reciprocating means to linearly reciprocate.

The lever is rotated when the movement body moves toward the article exit, thereby causing the pusher to move to a pushing position.

At the pushing position, the pusher pushes up the second article, thereby decreasing a contact pressure with the lowermost article.

Furthermore, the pusher is moved by the movement body to the article exit to push the article.

At this time, the pusher and the second article make rolling contact with each other. Since the contact pressure between the lowermost article and the second article is small, a flaw occurring due to chafing of articles with each other can be advantageously prevented.

In the invention according to the claims, the articles stacked on the base are pushed by the pusher to be dispensed from the article exit.

The pusher is formed of rollers, is guided by guide rails, and is rotatably mounted onto a lever rotatably provided to a linearly-reciprocating movement body. The movement body is caused by the traverse cam device to linearly reciprocate.

The lever is rotated when the movement body moves toward the article exit, thereby causing the pusher to move to a pushing position.

At the pushing position, the pusher pushes up the second article, thereby decreasing a contact pressure with the lowermost article.

Furthermore, the pusher is moved by the movement body to the article exit to push the article.

At this time, the pusher and the second article make rolling contact with each other. Since the contact pressure between the lowermost article and the second article is small, a flaw occurring due to chafing of articles with each other can be advantageously prevented.

Also, since the reciprocating movement of the movement body is performed by the rotation of the traverse cam, the device can be advantageously downsized.

In the invention according to the claims, the lever that moves the pusher between the pushing position and the standby position is rocked by the moved body caused to move by the traverse cam shaft and by the driving lever rocked by the reciprocating movement of the moved body via the link means.

With this rocking, the pusher is moved between the pushing position and the standby position.

Thus, the pusher can be caused to linearly reciprocate and also to move between the pushing position and the standby position with a simple configuration, thereby advantageously downsizing the dispensing device with low price.

In the invention according to the claims, the pusher is integrally mounted onto the lever rotatably supported to the movement body.

The movement body is caused by the traverse cam to reciprocate in parallel thereto, and the pusher integrally formed onto the lever rotatably mounted on the movement body is caused to integrally reciprocate in parallel to the traverse cam.

With the rotation of the traverse cam shaft, the moved body is rotated by the movement body and, in conjunction therewith, the lever, on which the pusher is formed, is caused to rotate.

Therefore, when the pusher pushes an article, the moved body moved by the traverse cam first causes the lever to rotate and, in conjunction therewith, the lever of the pusher is rotated to move the pusher to the pushing position, and then the movement body is moved along with the moved body via the lever.

With this, the lowermost article is pushed by the pusher.

At this time, since the pusher is at the pushing position away from the base farther than the thickness of the article, the article second from the lowermost is pushed by the pusher, thereby decreasing the load on the lowermost article (including zero).

Thus, the lowermost article is pushed by the pusher without being pressed hard onto the base, falling down from the base to be dispensed.

When the moved body moves in a return direction, the lever is rotated to rotate the lever of the pusher to move to the standby position.

Next, the movement body is moved together via the lever to be moved to a retract position.

At the retract position, the pusher goes out from the bottom of the article, and therefore the article falls down onto the base by its own weight.

When the article falls down onto the base, the pusher is located near the rear side wall of the article for preparing for the next dispensing.

According to this configuration, with a simple configuration of the traverse cam shaft, the moved body, the movement body, and two levers, the pusher can be caused to reciprocate and also to be moved between the standby position and the pushing position, thereby achieving configuration at low price.

In the invention according to the claims, the lever is forcefully moved from the standby position to the pushing position by the forceful movement means disposed on the movement passage.

With this, continuation of the standby state even when the pusher is in a dispensing process can be prevented, thereby causing the pusher to be forcefully moved to the pushing position.

Thus, it is possible to advantageously prevent a flaw occurring due to chafing of the lowermost article and an article thereon with each other and variations in discharging posture.

Furthermore, the configuration can be more simplified by using a fixed obstructing strip as the forceful movement means, thereby advantageously achieving a low-priced configuration.

In the invention according to the claims, the driven pin integrally formed on the driving lever is movably inserted in the grooved cam formed on the moved body, and the driving pin integrally formed on the driving lever is movably inserted in the grooved cam formed on the lever, thereby achieving link coupling.

With this, the pusher can be caused to reciprocate and also to move between the standby position and the pushing position with a simple configuration, thereby advantageously downsizing and also configuring the device with low price.

In the invention according to the claims, the traverse cam is a pair of traverse cam shafts that are disposed on the same axial line, and a pusher is provided for each traverse cam shaft so as to face it.

In other words, the pushers are disposed with their back facing each other, and are driven by and coupled to a common driving device.

Each traverse cam shaft is driven by the common driving device, and the pusher is caused to reciprocate by the rotation of the traverse cam shaft.

Therefore, two article dispensing devices can be selected and driven by one driving device, thereby advantageously downsizing and also configuring the device with low price.

In the invention according to the claims, one of the traverse cams causes the pusher to move by forward rotation of the driving device.

At this time, with the one-way clutch, the driving force from the driving device is not transferred to the other traverse cam, thereby keeping a static state.

With this, an article can be dispensed only by one of the pushers.

When the driving device reversely rotates, the other traverse cam shaft is rotated via the one-way clutch, whilst the one traverse cam shaft is interrupted from being driven and coupled by the one-way clutch, thereby not being rotated.

In other words, when the driving device reversely rotates, the other pusher is caused to reciprocate by the rotation of one traverse cam shaft to dispense an article, whilst the one traverse cam shaft is not rotated by the one-way clutch and no article is dispensed.

Thus, one article selected from two articles can be dispensed with the use of one driving device, thereby achieving advantages of downsizing and low price.

In an article dispensing device for an automatic vending machine, the device in which a side surface of a lowermost article of articles stacked on a base is pushed by a reciprocating pusher to be dispensed, the pusher is formed of rollers and is provided to a lever rotatably supported to a movement body that is guided by guide rails disposed in parallel to each other on the base so as to be able to linearly reciprocate, and the lever is held at a pushing position by a traverse cam device disposed in parallel to the guide rails in a process of moving toward an article exit and causes an article second from lowermost to float with respect to the lowermost article, and the lever is held at a standby position closer to the base than the pushing position in a process of moving away from the article exit.
Fig. 1 is a side view of an article dispensing device for an automatic vending machine in a first embodiment.
Fig. 2 is a perspective view of a moving device of a pusher of the article dispensing device for the automatic vending machine in the first embodiment.
Fig. 3 is an exploded perspective view of the moving device of a pusher of the article dispensing device for the automatic vending machine in the first embodiment.
Fig. 4 is a side view of the moving device of a pusher of the article dispensing device for the automatic vending machine in the first embodiment.
Fig. 5 is a cross-section view along an A-A line in Fig. 4.
Fig. 6(A) is a partial plan view of the pusher of the article dispensing device for the automatic vending machine in the first embodiment being at the most retracted position, and (B) is a cross-section view along a B-B line in Fig. 6(A).
Fig. 7 is an enlarged view for describing a link means of the article dispensing device for the automatic vending machine in the first embodiment.
Fig. 8 is a cross-section view along a C-C line in Fig. 1.
Fig. 9 is a control block diagram of the article dispensing device for the automatic vending machine in the first embodiment.
Fig. 10 is a flowchart for describing operations.
Fig. 11(A) is a plan view for describing the operation of the article dispensing device for the automatic vending machine in the embodiment, and (B) is a cross-section view along a D-D line in (A) (where the pusher is located at the most retracted position).
Fig. 12 is a side view for describing the operation of the article dispensing device for the automatic vending machine in the embodiment (where the pusher is located at the pushing position).
Fig. 13 is a side view for describing the operation of the article dispensing device for the automatic vending machine in the embodiment (at the time of an operation of a forceful movement body).
Fig. 14 is a side view for describing the operation of the article dispensing device for the automatic vending machine in the embodiment (at the time of a halfway of pushing an article).

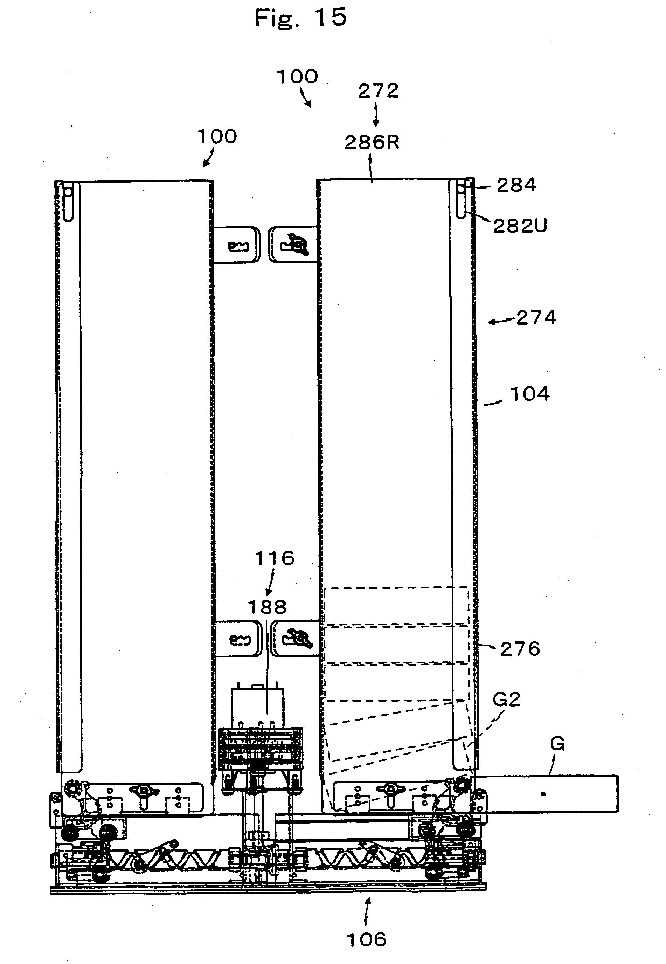

Fig. 15 is a side view for describing the operation of the article dispensing device for the automatic vending machine in the embodiment (at the time of the end of pushing an article).
Fig. 16 is a side view for describing the operation of the article dispensing device for the automatic vending machine in the embodiment (at the time of pushing).
Fig. 17 is a side view for describing the operation of the article dispensing device for the automatic vending machine in the embodiment (at the time of the start of returning of the pusher).
Fig. 18 is a schematic side view of a moving device of a pusher of an article dispensing device according to a second embodiment of the present invention.

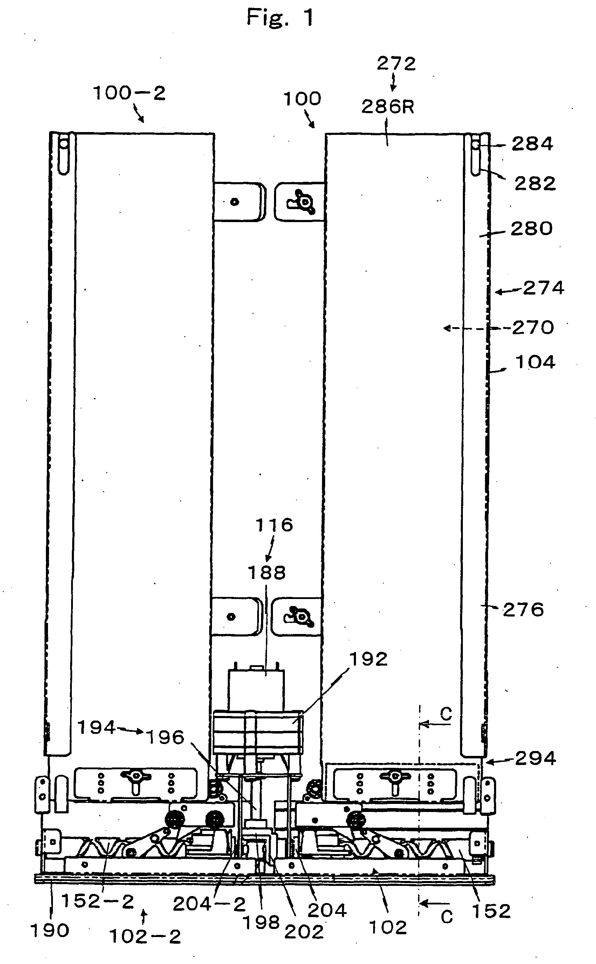

As depicted in Fig. 1, an article dispensing device 100 for an automatic vending machine in an embodiment has a function of dispensing a box-shaped article G, for example, "cigarette box", and includes an article pushing device 102 and an article holding device 104.

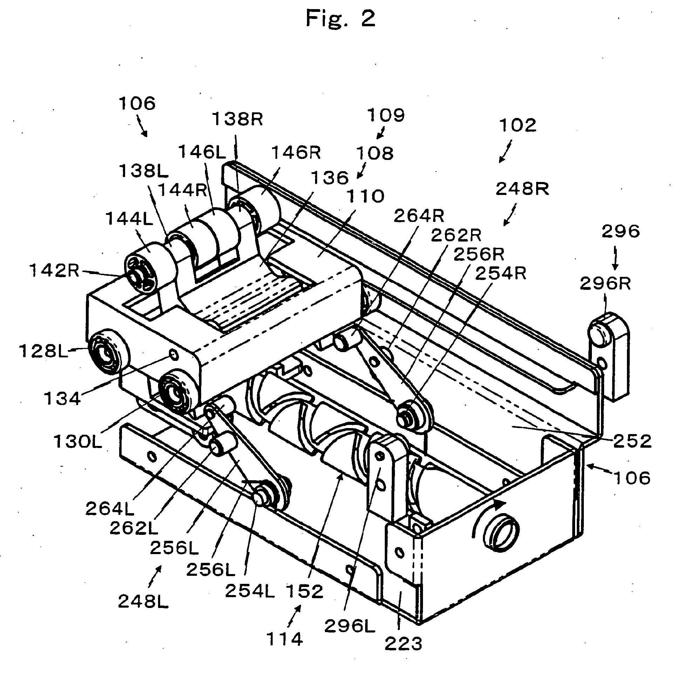

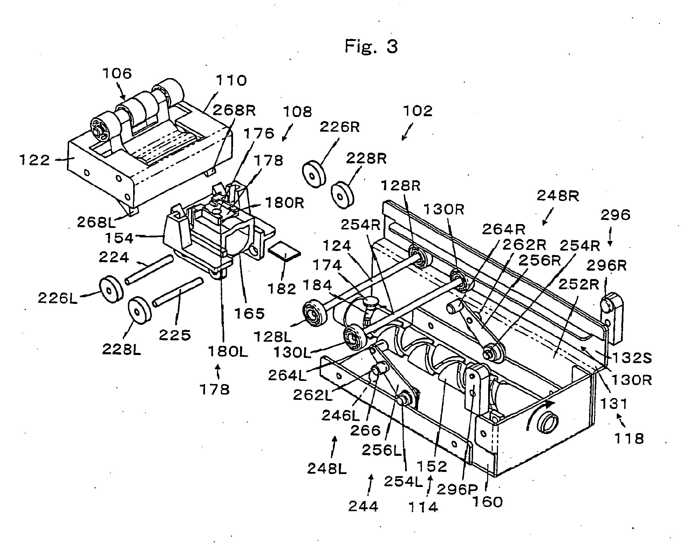

The article pushing device 102 includes a pusher 106 that pushes a rear wall of the box-shaped article and a moving device 108 of the pusher 106 (mainly refer to Figs. 2 and 3).

### First, the moving device 108 is described.

The moving device 108 has a function of causing the pusher 106 to reciprocate.

Therefore, the moving device 108 is reciprocating means 109 for the pusher 106.

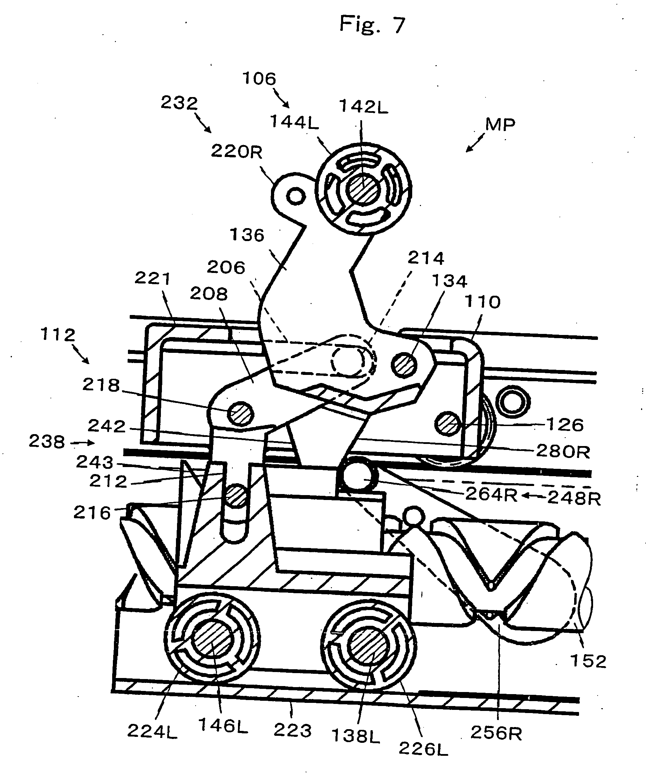

In the present embodiment, the moving device 108 includes a movement body 110 that supports the pusher 106, link means 112 (refer to Fig. 7), a traverse cam device 114 for causing the movement body 110 to reciprocate, and a driving device 116 (refer to Fig. 1) that drives the traverse cam device 114.

### Next, the movement body 110 is described.

The movement body 110 supports the pusher 106 so that the pusher can linearly reciprocate and can move between a standby position SP and a pushing position MP.

The movement body 110 is shaped in a box, and is supported by a guide device 118 so as to be able to reciprocate in a horizontal direction.

Specifically, rollers 128L and 128R and rollers 130L and 130R are rotatably mounted at both ends of a first shaft 124 and both ends of a second shaft 126 penetrating through side walls 122 of the movement body 110, and are movably inserted in a horizontal left guide groove 131 and a horizontal right guide groove 131R forming the guide device 118.

The left and right guide grooves 131L and 131R are horizontally-oriented grooves that are formed approximately horizontally to a main body 131 and are each configured to have a concave shape in a lateral direction with an upper guide rail 132A, a lower guide rail 132U, and a side guide rail 132S connecting these rails so that open portions face each other.

### Next, the pusher 106 is described.

The pusher 106 has a function of pushing the rear side wall of the article G.

The pusher 106 is integrally mounted on a support lever 136 rotatably pivoted on a third shaft 134 approximately horizontally supported by the movement body 110.

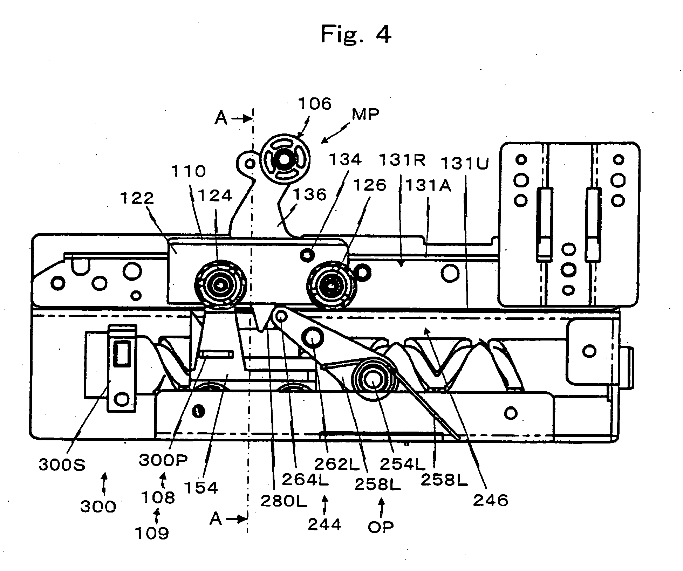

As depicted in Figs. 3 and 4, the support lever 136 has its middle portion slightly bent and its tip branched into two to form bearings 138L and 138R.

The bearings 138L and 138R support a fourth shaft 142L and a fifth shaft 142R, respectively, which each have left and right ends rotatably supporting rollers 144L, 144R, 146L, and 146R, respectively, as the pusher 106.

### Next, the traverse cam device 114 is described.

The traverse cam device 114 has a function of causing the movement body 110 to linearly reciprocate by one-way rotation.

The traverse cam device 114 includes a traverse cam shaft 152, a moved body 154, and rotation preventing means 158.

The cam shaft 152 is approximately horizontal to a frame 160 and is rotatably supported around an axial line, with its circumferential surface formed with a spiral grooved cam 162 in a predetermined range.

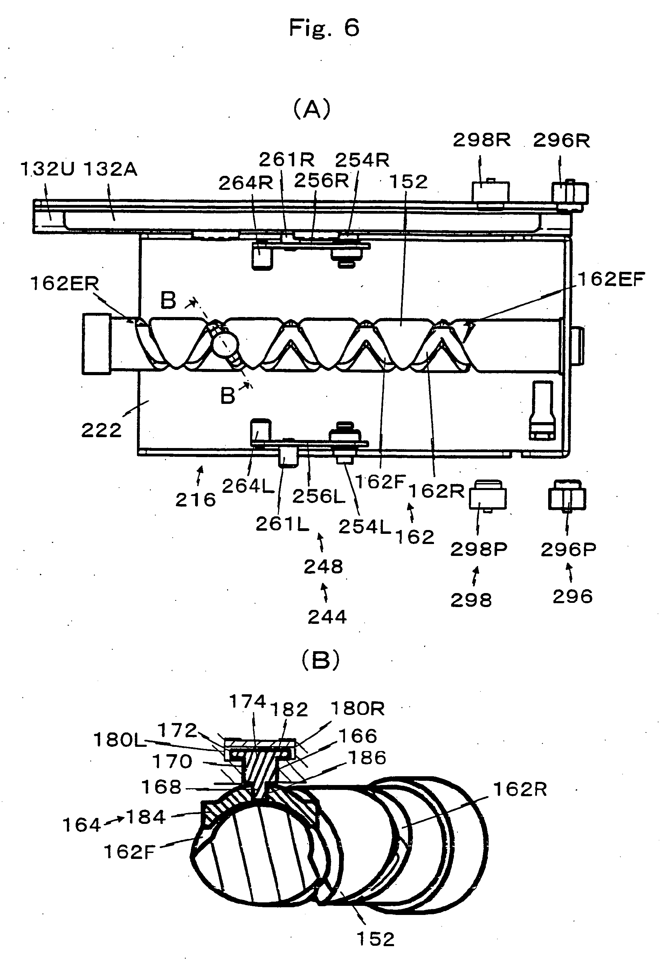

The grooved cam 162 includes a forward grooved cam 162F that moves a cam follower 164 toward a front end side (rightward in Fig. 6), in other words, toward an article exit, from a rear end side, a retract cam groove 162R that moves it in a reverse direction, and turning grooved cams 162EF and 162ER that couple these forward grooved cam 162F and the retract grooved cam 162R at their ends.

The turning grooved cam 162EF has a function of guiding the cam follower 164 from the forward grooved cam 162F to the retract grooved cam 162R, whilst the turning grooved cam 162ER has a function of guiding the cam follower 164 from the retract grooved cam 162R to the forward grooved cam 162F.

The cam shaft 152 is preferably resin-molded.

This is because the three-dimensional grooved cam 162 can be accurately mass-produced.

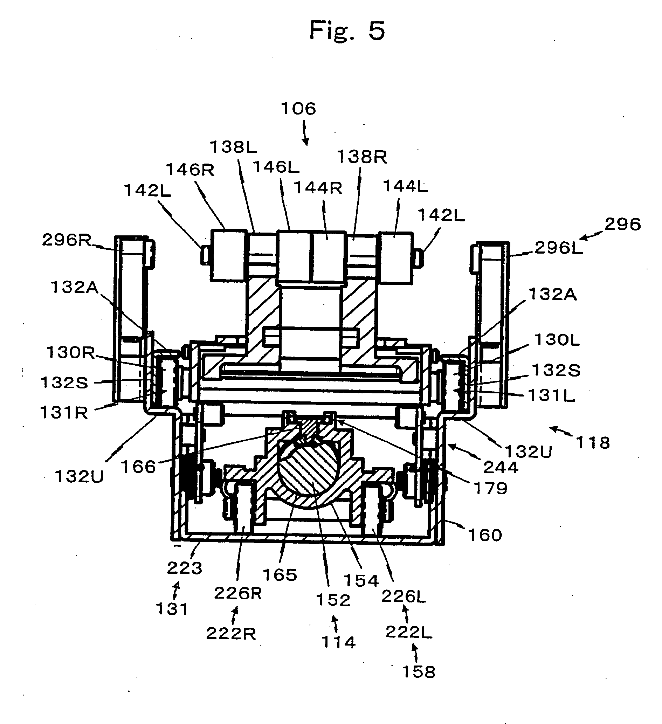

Next, the moved body 154 is described with reference to Fig. 5.

The moved body 154 has a function of being caused to linearly reciprocate along the cam shaft 152 with the rotation of the traverse cam shaft 152.

The moved body 154 has formed therein a circular penetration hole 164, through which the cam shaft 152 penetrates, and has an upper end portion formed with a holding hole 166 in a vertical state.

In the holding hole 166, a large diameter portion 170 of a coupling body 174 is rotatably and compactly inserted, the coupling body having a small diameter portion 168 at a lower end, the large diameter portion 170 in the middle, and a stopper 172 having a diameter larger than that of the large diameter portion 170 at an upper end.

With the lower surface of the stopper 172 applied onto an upper surface 178 of the moved body 154, the coupling body 174 is stopped from dropout by a holding plate 182 having ends inserted in holding grooves 180L and 180R that face each other and serve as a holding portion 179 formed on the upper surface of the moved body 154, thereby being integrated into the moved body 154.

The small diameter portion 168 of the coupling body 174 is rotatably inserted in a circular coupling hole 186, which is formed at the top of an arc-shaped slider 184 serving as the cam follower 164 slidably inserted in the grooved cam 162 and extends in a vertical direction.

The slider 184 is caused to linearly reciprocate along the cam shaft 152 by the forward grooved cam 162F and the retract grooved cam 162R by the rotation of the cam shaft 152.

In other words, the slider 184 linearly comes closer to and goes away from an article exit 294.

The moved body 154 is caused to linearly reciprocate while being guided by the cam shaft 152 via the coupling body 174.

Next, the driving device 116 is described with reference to Fig. 1.

The driving device 116 has a function of rotating the cam shaft 152 in a predetermined direction.

The driving device 116 includes an electric motor 188, a decelerator 192, and a transfer mechanism 194.

The electric motor 188 is a direct-current motor, is rotatable in forward and reverse directions, and is mounted on a chassis 190 of the automatic vending machine so that an output shaft points downward in an inverted state.

The decelerator 192 is rotated by the electric motor 188 at a predetermined deceleration rate, and its output shaft 196 is rotated at a predetermined speed and is mounted on the chassis 190.

The transfer mechanism 194 has a function of transmitting the rotation of the output shaft 196 to the cam shaft 152, and is configured of, in the present embodiment, a first bevel gear 198 fixed at the tip of the output shaft 196, a second bevel gear 202 mounted at the end of the cam shaft 152, and a one-way clutch 204 interposed between the second bevel gear 202 and the cam shaft 152.

When the electric motor 188 is rotated in a forward direction, the cam shaft 152 is rotated in a predetermined forward direction via the decelerator 192, the output shaft 196, the first bevel gear 198, the second bevel gear 202, and the one-way clutch 204.

When the electric motor 188 is rotated in a reverse direction, the rotation is not transferred by the one-way clutch 204, and the cam shaft 152 is not rotated.

Next, the guide device 118 is described with reference to Figs. 3 and 5.

The guide device 118 has a function of guiding the movement body 110 along the cam shaft 152.

The guide device 118 is formed of a left guide groove 131L and a right guide groove 131R. The rollers 128R and 130R are inserted in the right guide groove 131R, whilst the rollers 128L and 130L are inserted in the left guide groove 131L.

With this, the vertical movement of the rollers 128R, 130R, 128L, and 130L is regulated by the upper guide rail 132A and the lower guide rail 132U, and also the horizontal movement thereof is regulated by the side guide rail 132S. Therefore, the movement body 110 can linearly reciprocate in an approximately horizontal direction.

Next, the link means 112 is described with reference to Fig. 7.

The link means 112 has a function of transmitting the reciprocating movement of the moved body 154 to the movement body 110.

The link means 112 includes a first grooved cam 206 formed on a lever 136, a second lever 208, a second grooved cam 212 formed on the moved body 154, and a first pin 214 mounted at one end of the second lever, which serves as a driving lever, and a second pin 216 mounted at the other end thereof.

The second lever 208 has its middle portion rotatably mounted on a fourth shaft 218 mounted on the movement body 110 parallel to a third shaft 134 on the movement body 110.

The fourth shaft 218 is disposed on a rear side in a direction of dispensing the article G with respect to the third shaft 134.

The second lever 208 has an approximately T shape, with its middle portion supported by the fourth shaft 218 so as to be able to rock.

The first pin 214 is inserted in the first grooved cam 206 formed on the side surface of the lever 136, whilst the second pin 216 is inserted in the second grooved cam 212 that is formed on the moved body 154 approximately vertically with its upper end open.

With this, when the moved body 154 relatively moves with respect to the movement body 110, the second lever 208 is rotated via the second grooved cam 212 and the second pin 216, whilst the lever 136 is rotated with respect to the movement body 110 via the first pin 214 and the first grooved cam 206.

In the present embodiment, when the moved body 154 is relatively moved with respect to the movement body 110 from the state depicted in Fig. 7 to left, that is, in a return direction, the second pin 216 is also moved in the same direction. Therefore, the second lever 208 is rotated clockwise.

With this, the first pin 214 causes the lever 136 to move counterclockwise via the first grooved cam 206 with the third shaft 134 as a fulcrum, and is stopped with protrusions 220L and 220R on the back surface of the lever 136 being engaged with an upper surface 221 of the movement body 110.

This stop position corresponds to the standby position SP of the pusher 106.

When the moved body 154 is relatively moved with respect to the movement body 110 from the state in which the pusher 106 is located at the standby position SP to right, that is, in a dispensing direction, the second pin 216 is pushed by the second grooved cam 212, thereby causing the second lever 208 to be rotated counterclockwise.

With this, the first pin 214 causes the lever 136 to rotate clockwise via the first grooved cam 206, thereby causing the pusher 106 to be moved to the pushing position MP (the position depicted in FIG. 7).

Next, the rotation preventing means 158 is described with reference to Fig. 5.

The rotation preventing means 158 has a function of holding the moved body 154 so that it sustains a predetermined posture with respect to the cam shaft 152.

The rotation preventing means 158 is formed of a first posture sustainer 222L and a second posture sustainer 222R mounted on the moved body 154.

The first posture sustainer 222L and the second posture sustainer 222R make contact with a base 223 forming the frame 160 so that the moved body 154 is not rotated together with the rotation moment received from the cam shaft 152 via the slider 184.

In the present embodiment, the first posture sustainer 222L and the second posture sustainer 222R are formed of rollers 226R, 226L, 228R, and 228L rotatably mounted on both ends of a fifth shaft 224 and a sixth shaft 225, respectively, horizontally mounted on the moved body 154.

The rollers 226R, 226L, 228R, and 228L are rotated to move on the base 223.

Thus, when the cam shaft 152 is rotated in a predetermined direction and the moved body 154 is rotated via the slider 184, the rollers 226R, 226L, 228R, and 228L are inhibited from movement by the base 223, and therefore the rotation of the moved body 154 about the cam shaft 152 is prevented.

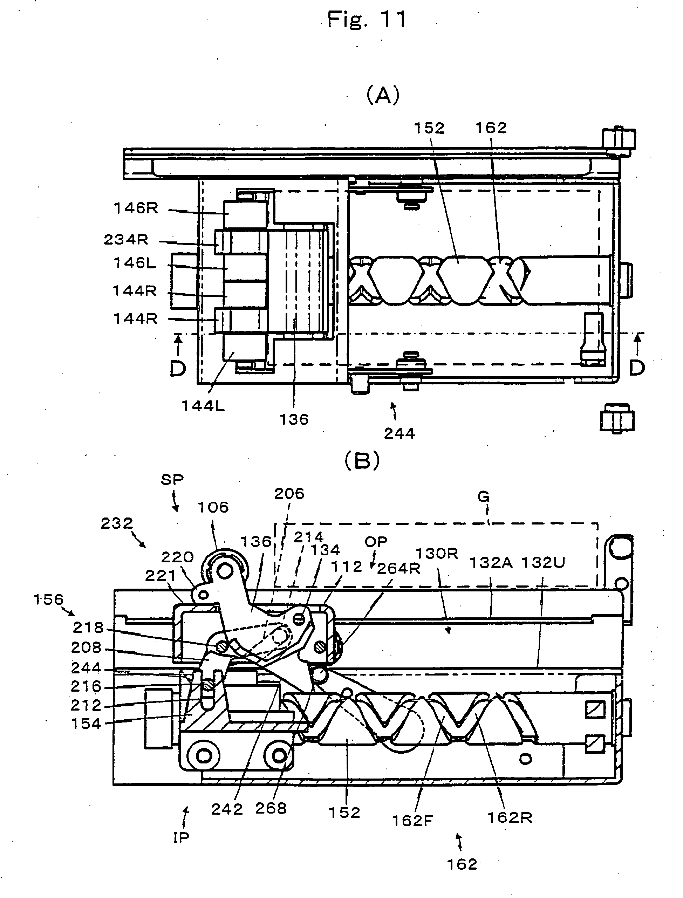

Next, standby-position sustaining means 232 is described with reference to Figs. 7 and 11.

The standby-position sustaining means 232 has a function of holding the pusher 106 at the standby position SP, in more detail, holding the pusher 106 at the standby position SP when the pusher 106 performs return movement.

In the present embodiment, the standby-position sustaining means 232 is formed of the protrusions 220L and 220R protruding rearward from the levers 138L and 138R, and the upper surface 221 of the movement body 110.

As depicted in Fig. 11(B), when the lever 136 is rotated counterclockwise, the protrusions 220L and 220R abut on the upper surface 221 of the movement body 110 and cannot rotate further.

When the pusher 106 is located at the standby position SP, as described further below, the article G is pushed up by the upper end of the pusher 106.

Next, pushing-position sustaining means 238 is described with reference to Fig. 7.

The pushing-position sustaining means 238 has a function of holding the pusher 106 at the pushing position MP near the article holding device 104.

In the present embodiment, the pushing-position sustaining means 238 is formed of a lower back surface 242 of the lever 136 and a stopper 244 of the moved body 154.

When the lever 136 is rotated clockwise, the lower back surface 242 of the lever 136 abuts on the stopper 244, and cannot rotate further.

This position is the pushing position MP.

When the pusher 106 is located at the pushing position MP, the upper end of the pusher 106 protrudes slightly upward from the upper end of the lowermost article G, and pushes up an article G2 second from the lowermost, as described further below.

With this, the contact pressure between the lowermost article G and the article G2 located thereon is reduced, thereby preventing a flaw on the articles as much as possible.

Next, forceful movement means 244 of the pusher 106 is described with reference to Figs. 3 and 4.

The forceful movement means 244 has a function of forcefully moving the pusher 106 to the pushing position MP when it continues to be at the standby position SP in a pushing process.

In detail, the forceful movement means 244 uses movement of the pusher 106 in a pushing process to move the pusher 106 to the pushing position MP.

The forceful movement means 244 is formed of an obstructing member 248 fixedly disposed on a movement path 246 at a lower end of the lever 136.

In the present embodiment, the obstructing member 248 is formed of a right obstructing member 248R and a left obstructing member 248L disposed on the right and left of the traverse cam device 114, but may be formed of only one of these obstructing members.

Since the right obstructing member 248R and the left obstructing member 248L have the same configuration, the right obstructing member 248R is described as a representative, and the left obstructing member 248L is not described herein, with a reference character R provided to the right obstructing member being changed to L.

The right obstructing member 248R receives a rotation force clockwise in Fig. 4 by an obstructing lever 256R rotatably supported to a fixed shaft 254R horizontally protruding inward from a side wall 252R of the main body 131 and by a torsion spring 258R wound around the fixed shaft 254R with one end in a hole (not shown) of the base 223 and the other end hanging at the obstructing lever 256R.

A pin 262R protruding outward from the side of the obstructing lever 256R is inserted in a long hole (only 246L is displayed) formed on the side wall 252R, is engaged with the stopper 266 serving as one end face of the long hole 246L by the rotation force of the torsion spring 258R, and is held at an obstructing position OP.

When the pin 262L is held at the obstructing position OP, an engaging pin 264R at the tip is held at a position where it abuts on an approximately-vertical lower end face 280R of the lever 136 when the pusher 106 is located at the standby position SP.

With this configuration, when the pusher 106 in a state of being located at the standby position SP is moved in a direction of dispensing the article G, the end face 280 of the lever 136 abuts on the engaging pins 264R and 264L each positioned at the obstructing position OP (refer to Figs. 4 and 7).

Since the engaging pins 264R and 264L are substantially fixed, in accordance with the movement of the movement body 110, the lever 136 is rotated clockwise about the third shaft 134 to be moved to the pushing position MP.

When the lever 136 is rotated to the pushing position MP, the first pin 214 is rotated counterclockwise in Fig. 7 by the second grooved cam 206. Therefore, the second lever 208 is also rotated in the same direction, thereby causing the lower-end back surface 242 to be engaged with the stopper 244 of the moved body 154 moving in a relatively right direction and be inhibited from rotation.

With the rotation of the lever 136, the lower end face 280 is tilted downward. With the movement of the movement body 110 in the pushing direction, a component of force to push the engaging pins 264R and 264L downward is generated.

With this, the engaging pins 262R and 262L are pushed downward, and therefore the obstructing levers 256R and 256L are rotated downward in Fig. 4 to be away from the movement path 246 of the lower end faces 280R and 268L.

Thus, the movement body 110 can further move in the pushing direction to the pushing position by the forward grooved cam 162F of the traverse grooved cam 162.

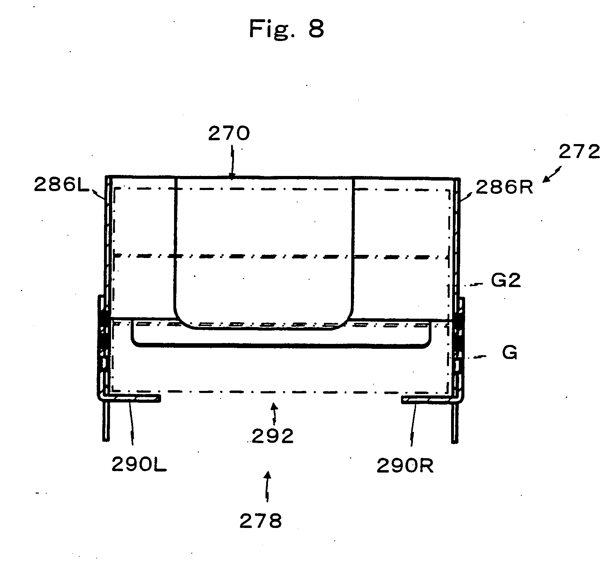

Next, the article holding device 104 is described with reference to Figs. 1 and 8.

The article holding device 104 has a function of holding box-shaped articles G as being stacked.

The article holding device 104 is configured of a holding unit body 272 having a holding room 270 that is formed in a channel shape in section and extends in a vertical direction, a lid 276 that positions at one side surface of the holding room 270 and opens and closes a vertically-elongated refill opening 274 for loading and unloading the article G, and a base 278 on which the article G is mounted.

The lid 276 is formed in a channel shape in section, and is mounted on the holding unit body 272 so as to make a pivotal movement, with side walls 280 at both ends covering the refill opening 274 of the holding unit body 272, a U groove 282 at an upper end fitting in a holding pin 284 protruding outward, and a lower end being engaged with the holding unit body 272 by engaging means (not shown).

The base 278 is configured of a left base plate 290R and a right base plate 290L, which are angular members fixed by fixing means 288 to lower-end side walls of left and right side walls 286R and 286L of the holding unit body 272 so as to be positionally adjustable.

With this, the height of the article exit 294 formed of the left base plate 290R, the right base plate 290L, and a lower end 292 of the lid 276 can be changed.

The articles G each have right and left ends placed between the left base plate 290R and the right base plate 290L, and are stacked and held in the holding room 270.

By changing the mounting position of the left base plate 290R and the right base plate 290L onto the left and right side walls 286R and 286L, the height of the article exit 294 is adjusted so as to exceed the height of each article G and to have a space equal to or shorter than double the height.

Between the left base plate 290R and the right base plate 290L, a movement opening 292 of the pusher 106 is formed.

In other words, the pusher 106 can reciprocate across the movement opening 292.

The article holding device 104 is removably located at a predetermined position of the frame 160 and, when mounted on the frame 160, is fixed by a screw (not shown).

Next, a dispense sensor device 296 is described with reference to Fig. 6.

The dispense sensor device 296 has a function of detecting that one article G has been dispensed from the article exit 294.

The dispense sensor device 296 is configured of a light caster 296P and a light receiver 296R disposed on the left and right of the article exit 294.

The dispense sensor device 296 outputs a dispense signal DS when the article G passes through the article exit 294.

### Next, an article empty sensor 298 is described.

The empty sensor 298 is formed of the light caster 298P and the light receiver 298R.

The empty sensor 298 is disposed so that an optical axis is interrupted by the lowermost article G, and outputs an empty signal ES when the light receiver 298R receives light cast from the light caster 298P.

Next, an initial position sensor device 300 is described with reference to Fig. 4.

The initial position sensor device 300 has a function of detecting the position of the pusher 106, specifically, a most retracted position IP (refer to Fig. 11B) of the moved body 154 and outputting an initial position signal IS.

The initial position sensor device 300 is configured of a detected strip 300P protruding sideward from the moved body 154 and a transmission-type photoelectric sensor 300S fixed to the frame 160.

The photoelectric sensor 300S is disposed at the most retracted position of the moved body 154 moved by the traverse cam device 114 and, when the transmitted light is interrupted by the detected strip 300P, the photoelectric sensor 300S outputs the initial position signal IS.

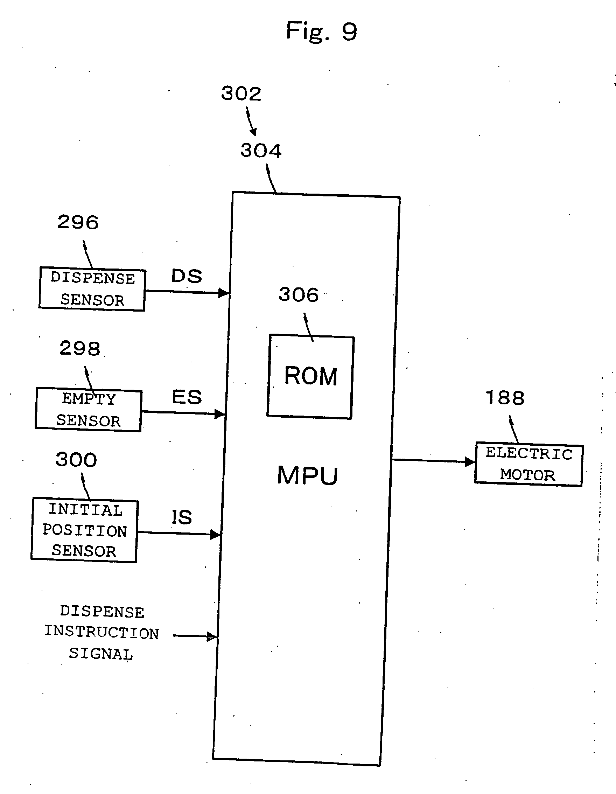

Next, a control device 302 is described with reference to Fig. 9.

The control device 302 is configured of a microcomputer 304, and receives the dispense signal DS of the dispense sensor 296, the empty signal ES from the empty sensor 298, and a dispense instruction signal PS of the automatic vending machine.

The microcomputer 304 performs a predetermined process based on a program stored in a storage device 306 to forwardly and reversely rotate and stop the electric motor 188.

In the present embodiment, as depicted in Fig. 1, the discharging device 100 and a second discharging device 100-2 are disposed symmetrically with their backs facing each other.

In other words, the traverse cam shafts 152 of both devices are disposed on the same axial line.

Only the different configuration is that the rotation transmitting direction of the one-way clutch 204-2 in the second discharging device 100-2 is reversed.

In other words, the traverse cam shaft 152 of the second discharging device 100-2 is rotated only by a reversed rotation of the electric motor 188.

Thus, the article G is discharged from the first discharging device 100 with a forward rotation of the electric motor 188, whilst the article G is discharged from the second discharging device 100-2 with a reverse rotation thereof.

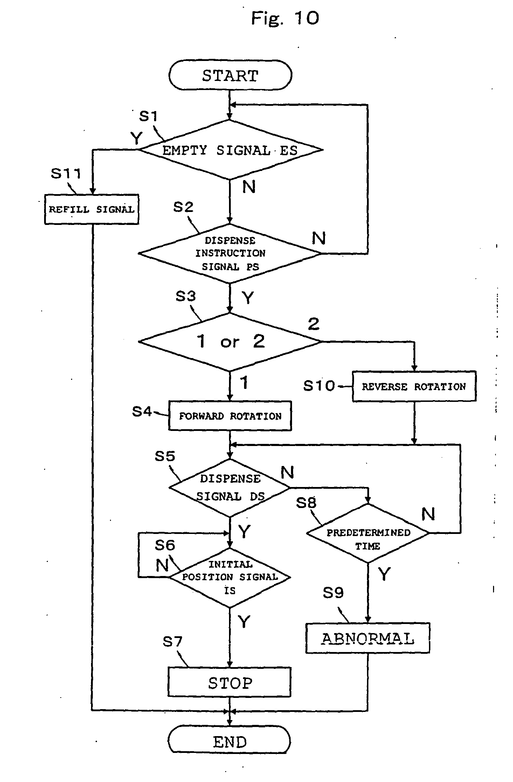

Next, the operation of the present embodiment is described with reference to also a flowchart of Fig. 10.

First, prior to activation of the automatic vending machine, the articles G are stacked in the article holding device 104.

In detail, after the lid 276 is pushed upward to release a hood at the lower end, the holding pin 284 is pivotally rotated to be approximately horizontal, with the U groove 282 still being engaged with the holding pin 284, and then part of the upper end of the lid 276 is pressed under a top plate to be engaged with the top plate, thereby holding the lid 276 to be in an approximately horizontal state.

Next, the box-shaped articles G are inserted from the refill opening 274 to be stacked on the base 278.

At this time, the pusher 106 is held at the most retracted position IP and the standby position SP.

After the articles G are stacked, the lid 276 is engaged with the holding unit body 272 through a procedure reverse to the above.

With this, the discharging device 100 and the second discharging device 100-2 are in a standby state.

Next, an operation of dispensing the article G is described.

Here, the discharging device 100 is referred to as a first discharging device 100 for convenience.

First, the case is described in which the article G is dispensed from the first discharging device 100.

In a standby state, the pusher 106 is located at the standby position SP at the position IP farthest away from the article exit 294 (refer to Fig. 11).

In step S1, it is determined whether the empty signal ES for the article G has been output. If the signal is not present, the procedure goes to step S2. If the signal is present, the procedure goes to step S11.

In step S11, an article refill signal is output to the control device of the automatic vending machine, thereby terminating the process.

If it is determined in step S2 that the dispense signal PS has been output from the control device of the automatic vending machine, the procedure goes to step S3. If it is not determined as such, the procedure returns to step S1.

In step S3, it is determined whether the dispense instruction is directed to the first discharging device 100 or the second discharging device 100-2.

This time, dispensing is from the first discharging device 100, and therefore the procedure goes to step S4.

In step S4, the electric motor 188 is rotated forward.

With this, the cam shaft 152 is rotated via the one-way clutch 204 (an arrow direction in Figs. 2 and 3), and the grooved cam 162 also rotates in the same direction.

The slider 184 is guided by the forward grooved cam 162F by the clockwise rotation of the grooved cam 162 to proceed toward an article exit 294 side.

Since the coupling body 174 with the small diameter portion 168 being inserted in the coupling hole 186 of the slider 184 is moved by the slider 184 in the same direction, the moved body 154 with the large diameter portion 170 fitting in the holding hole 166 is moved in the same direction.

The moved body 154 is guided by the cam shaft 152 and, with the rollers 226R and 228R being guided by the base 223 to be inhibited from rotating, is moved along the first cam shaft 152 toward the article exit 294.

With the movement of the moved body 154 going closer to the article exit 294, the second pin 216 is pushed by the second grooved cam 212 in the same direction.

With the second pin 216 being pushed, the second lever 208 is rotated counterclockwise in Fig. 11 and, in conjunction therewith, the first pin 214 pushes the first grooved cam 206 to rotate the lever 136 clockwise.

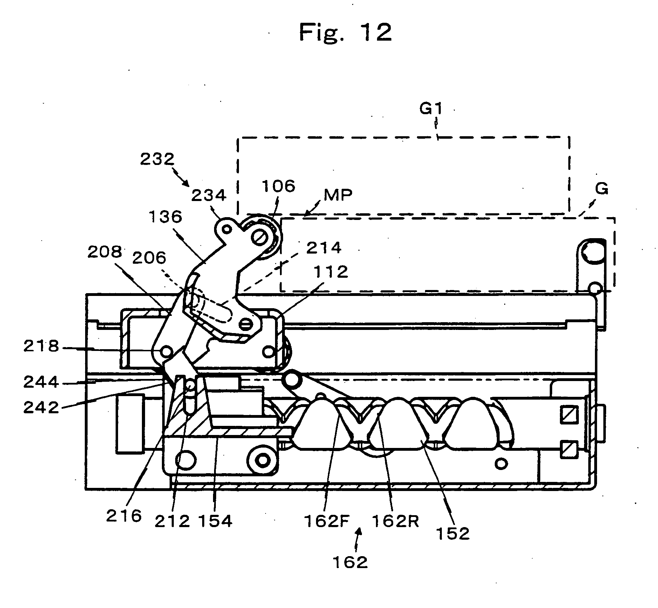

As a result, the pusher 106 moves from the standby position SP of Fig. 11 to the pushing position MP depicted in Fig. 12.

With the subsequent rotation of the cam shaft 152, the moved body 154 is further moved to the article exit 294 side to cause the stopper 244 to engage with the lower back surface 242 of the lever 136, and is then pushed toward the article exit 294 with the stopper 244 pushing the lower back surface 242.

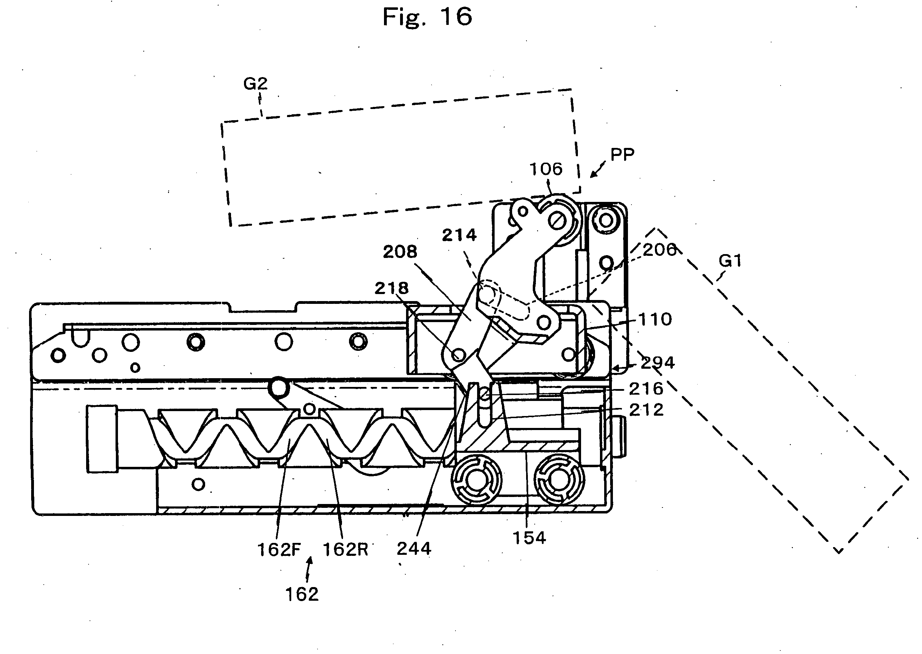

This pushing is performed upto the turning grooved cam 162EF, which is a coupling portion between the forward grooved cam 162F and the retract grooved cam 162R (refer to Fig. 16).

At this time, the upper end of the pusher 106 is located slightly above the lowermost article G, and therefore the article G2 positioned second is pushed up by the pusher 106.

Since the pusher 106 are rollers 144L, 144R, 146L, and 146R, they abut on the second article G in a rolling manner, and do not generate a flaw due to chafing on the lower surface of the article G.

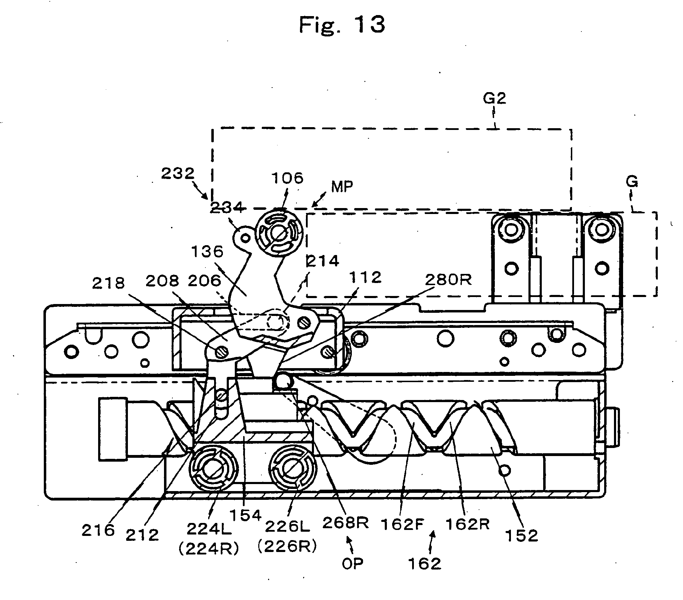

When the pusher 106 is not moved to the pushing position MP with the movement of the moved body 154 toward the article exit 294, the pusher 106 reaches the forceful movement means 244 with the standby position SP being sustained (refer to Fig. 13).

The lower end faces 280L and 280R of the lever 136 moving the movement path 246 abut on the engaging pins 264L and 264R each position at the obstructing position OP.

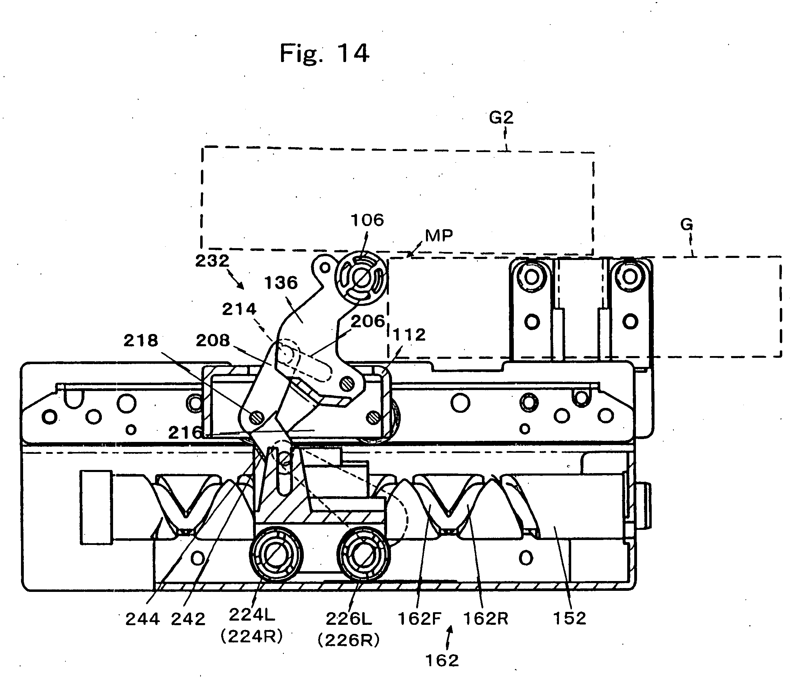

With this abutment, the engaging pins 264L and 264R are in a substantially fixed state. Therefore, in accordance with the movement of the movement body 110, the lever 136 is rotated clockwise about the third shaft 134, with its lower-end back surface 242 abutting on the stopper 244 to be forcefully moved to the pushing position MP (refer to Fig. 14).

Then, the pusher 106 pushes the article G toward the article exit 294 with the pushing position MP being sustained.

After the lower-end back surface 242 is engaged with the stopper 244, the engaging pins 264L and 264R are pushed downward against an elastic force of springs 258L and 258R by the lower end face 280L and 280R so as not to inhibit the movement of the lever 136. Therefore, the lever 136 is continued to be moved toward the article exit 294.

With this, the second article G2 is slightly floated from the upper surface of the lowermost article G, and therefore the lowermost article G and the second article G2 do not make a surface contact with each other. The lowermost article G has a small friction force, and can be pushed with a smaller force.

When the lowermost article G falls from the base 223, as described above, the second article G2 is slightly pushed up by the pusher 106, and therefore the lowermost article G is not pushed by anything for free falling (refer to Fig. 16).

In other words, since the lowermost article G has its end not pushed by the second article G2, it can naturally fall without complex movements by being kicked.

With the discharge of the article G, light from the light caster 296P is interrupted and is then received again. With this re-reception of light, the dispense sensor 296 outputs the dispense signal DS.

If it is determined in step S5 that the dispense signal DS is present, the procedure goes to step S6.

In step S6, it is determined whether an initial position signal IS is present. If the signal is not detected, the procedure loops. If the signal is detected, the procedure goes to step S7.

In other words, the electric motor 188 continues to rotate until the initial position signal IS is detected.

When the slider 184 reaches the turning grooved cam 162EF on the article exit 294 side of the grooved cam 162 with the rotation of the cam shaft 152, the slider 184 is guided by the reversely-oriented retract grooved cam 162R, and therefore the moved body 154 is moved in a direction away from the article exit 294.

In the retract movement of the moved body 154, the moved body 154 is moved in a direction away from the article exit 294 with a retract movement of the slider 184.

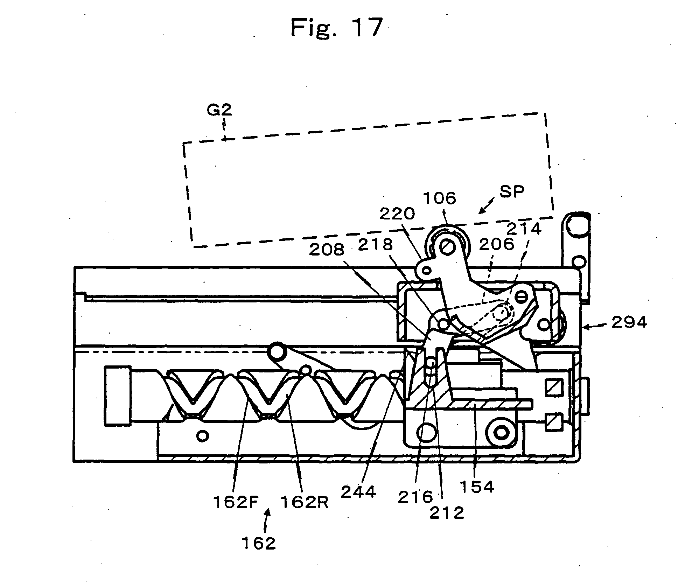

With this, the second pin 216 is moved leftward by the retract grooved cam 162R as depicted in Fig. 17, thereby rotating the second lever 208 clockwise.

With the clockwise rotation of the first pin 214, the lever 136 is moved counterclockwise via the first grooved cam 206, a protrusion 234 is engaged with the upper surface 221 of the movement body 110, and the pusher 106 is located at the standby position SP (refer to Fig. 17).

A newly lowermost article G is placed on the pusher 106.

With the continuous movement of the moved body 154 in a direction away from the article exit 294, the movement body 110 is moved as being dragged by the moved body 154 via the second pin 216.

At this time, the lower surface of the lowermost article G2 makes rolling contact with the rollers 144L, 144R, 146L, and 146R configuring the pusher 106, and therefore a flaw is not generated by the pusher 106.

With this movement, when the slider 184 becomes located at the most-retracted turning grooved cam 162ER, the detected strip 3009 interrupts the optical axis of the sensor 300S, and therefore an initial position signal IS is output.

In step S6, when an initial position signal IS is detected, the procedure goes to step S7.

In step S7, the electric motor 188 is stopped, thereby terminating the process.

If a dispense signal DS is absent in step S5, the procedure goes to step S8.

In step S8, it is determined whether a predetermined time has elapsed from the start of the electric motor 188 and, if the predetermined time has not elapsed, the procedure returns to step S4.

If it is determined in step S8 that the predetermined time has elapsed, it is determined that the article G is jammed or abnormality has occurred in the first discharging device 100, and then the procedure goes to step S9.

In step S9, the electric motor 188 is stopped and also an abnormal signal is output to the control device of the automatic vending machine, thereby terminating the process.

The control device of the automatic vending machine performs abnormal handling, such as an error display on a display unit, based on the abnormal signal.

If a dispense instruction directed to the second discharging device 100-2 is detected in step S3, the procedure goes to step S10.

In step S10, the electric motor 188 is rotated in reverse, and then the procedure goes to step S5.

With this, the second cam shaft 152-2 is rotated via the second one-way clutch 204-2, thereby discharging the article G from the second discharging device 100-2 in a manner similar to that of the first discharging device 100.

At this time, the first cam shaft 152 is prevented by the first one-way clutch 204 from rotating, and is therefore not rotated.

The operation in step S5 and thereafter is similar to that described above. 7

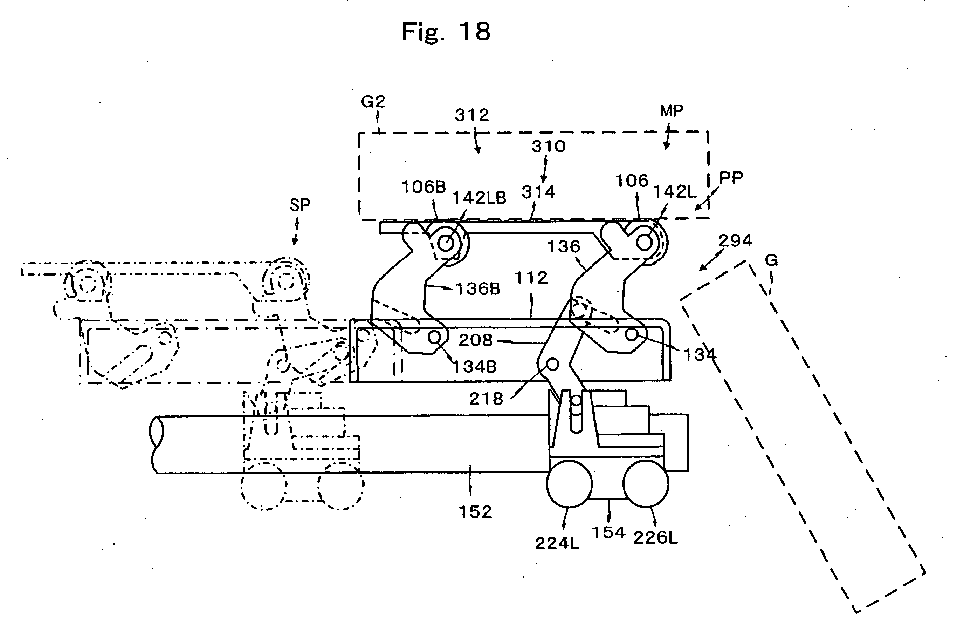

Fig. 18 is a schematic side view of a moving device of the pusher of the article dispensing device for the automatic vending machine according to a second embodiment of the present invention.

The second embodiment exemplifies a case in which a plurality of pushers are provided to allow the second article to be pushed from a predetermined position in a state where the second article is completely isolated from the lowermost article, thereby further preventing a flaw due to chafing of articles with each other.

A configuration different from that of the first embodiment is described, and the same functional portions as those in the first embodiment are provided with the same reference numerals and are not described herein.

A second pusher 106B is configured of four rollers similarly to the pusher 106, and is rotatably mounted at the tip of a lever 136B rotatably mounted on a second third shaft 134B fixed to the movement body 110.

In the second embodiment, the second pusher 106B does not push any article G, but is referred to as a pusher for convenience of description.

A link member 310 is pivotally provided to a second fourth shaft 142LB and a second fifth shaft 142RB (not shown) corresponding to the fourth shaft 142L and the fifth shaft 142R.

A parallel four link mechanism 312 is configured of the third shaft 134, the second third shaft 134B, the lever 136, the second lever 136B, the fourth shaft 142L and the fifth shaft 142R, the second fourth shaft 142LB and the second fifth shaft 142RB, the movement body 110, and the link member 310.

The link member 310 is provided slightly lower than the upper end of the pusher 106 and the second pusher 106B, with a plate-like member 314 closing a space between the pusher 106 and the second pusher 106B.

The plate-like member 314 is arbitrary as long as it has a substantially plate shape, and may have a net-like shape, for example.

Next, the operation of the second embodiment is described.

When a dispense instruction signal PS is output, as with the first embodiment, the moved body 154 is moved toward the article exit 294 by the rotation of the traverse cam shaft 152.

With this, the pusher 106 is moved from the standby position SP to the pushing position MP to slightly push the second article G2 from downward.

In this state, the lower end of the second article G2 on the article exit 294 side is supported by the upper surface of the lowermost article G.

However, since part of the load on the article G2 is supported by the pusher 106, the load applied onto the lowermost article G is decreased as a whole.

With the movement of the pusher 106 toward the article exit 294, the supporting point of the second article G2 supported by the pusher 106 is sequentially moved to the article exit 294 side, and therefore the load applied onto the upper surface of the lowermost article G from the lower end of the article G2 is sequentially decreased.

Then, when the supporting point of the article G2 by the pusher 106 passes the barycenter of the article G2, the article G2 is rotated with its self moment, thereby causing the rear end to be supported on the plate-like member 314.

With this, the second article G2 is completely isolated from the upper surface of the lowermost article G.

In other words, the lowermost article G is pushed without receiving any load from the second article G2.

The second article G2 is supported by the second pusher 106B with further movements of the pushers 106 and 106B.

Then, the pusher is moved to the pushing position PP to cause the lowermost article G to fall down from the article exit 294.

Thus, the lowermost article G can naturally fall down under its own weight without being kicked at the article exit 294.

Also, since the lowermost article G is supported by the plate-like member 314 and the second pusher 106B, the frictional contact force between the lowermost article G and the second article G2 can be reduced and, furthermore, be made to zero eventually because they are isolated from each other.

Thus, a flaw due to chafing of articles with each other can be advantageously prevented.

Here, in the second embodiment, by narrowing the space between the pusher 106 and the second pusher 106B, the parallel link mechanism 312 can be formed without providing the plate-like member 314.

In the present invention, the article holding device 104 can be placed laterally.

In this case, pushing means is required that pushes the article G toward the base 278.

In the present invention, an automatic vending machine can also be configured only with the discharging device 100.

In this case, the one-way clutch 204 is not required to be provided.

This is because the rotation of the traverse cam shaft can be controlled only through ON/OFF of the electric motor 188.

Furthermore, in the present invention, with a plurality of sets of the first discharging device 100 and the second discharging device 100-2 being placed, it is possible to configure an automatic vending machine that dispenses many more types of articles.

The pusher 106 is not required to be configured with four rollers as in the first embodiment, but can be configured with one or more rollers.

## Claims

1. An article dispensing device for an automatic vending machine, the device in which a side surface of a lowermost article (G) of articles stacked on a base (278) of an article holding device (104) is pushed by a pusher (106) to be dispensed,
the pusher (106) being formed of rollers (144L, 144R, 146L, and 146R) and being provided to a lever (136) rotatably supported to a movement body (110) caused by reciprocating means (109) to linearly reciprocate, and
the lever (136) being held at a pushing position (MP) in a process of moving toward an article exit (294) and causing an article second from lowermost (G2) to float with respect to the lowermost article (G) **characterized in that** the lever (136) is held at a standby position (SP) closer to the base (278) of the article holding device (104) than the pushing position (MP) in a process of moving away from the article exit (294).

2. The article dispensing device according to claim 1, wherein
the lever (136) is rocked by a moved body caused to reciprocate by a traverse cam shaft disposed in parallel to the guide rails (131A and 131U), and also is link-coupled by link means (112) to a driving lever (208) rotatably mounted on the movement body (110).

3. The article dispensing device according to claim 2 wherein
the link coupling is made by movably inserting a moved pin (216) integrally formed on the driving lever (208) into a grooved cam (212) formed on the moved body and the link coupling is made by movably inserting a driving pin (214) integrally formed on the driving lever (208) into a grooved cam (206) formed on the lever.

4. The article dispensing device according to any one of the preceding claims 1 to 3, wherein
forceful movement means (244) is disposed on a movement path of the lever (136) so as to make contact with the lever (136) to push and forcefully move the lever (136) to the pushing position (MP).

5. The article dispensing device according to claim 3, wherein the driven pin (214) of the lever (136) is inserted so as to have a relation in which the driven pin (214) is drawn by the grooved cam (206).

6. The article dispersing device according to any one of the preceding claims wherein the movement body (110) is guided by guide rails (131A and 131U) disposed in parallel to each other on the base (278) so as to be able to linearly reciprocate.

7. The article dispensing device according to any one of the preceding claims wherein the the lever (136) being held at a pushing position (MP) by a traverse cam device (114) disposed in parallel to the guide rails (131A and 131U) in a process of moving toward an article exit (294) and causing an article second from lowermost (G2) to float with respect to the lowermost article (G).

8. The article dispensing device according to claim 7, wherein the traverse cam device (114) includes a pair of traverse cam shafts that are disposed on a same axial line and are coupled to a common driving device (116) so as to be driven thereby.

9. The article dispensing device according to claim 8,
wherein one-way clutches (204, 204-2) are disposed in a driving mechanism between the driving device (116) and each of the traverse cam shafts, the one-way clutches (204, 204-2) differ from each other in transfer rotating direction, and the driving device (116) is selectively rotated in a forward or reverse direction based on a selected article.

## Patentansprüche

1. Artikelausgabevorrichtung für einen automatischen Verkaufsautomaten, in der eine Seitenoberfläche eines untersten Artikels (G) der Artikel, die auf einer Basis (278) einer Artikelhaltevorrichtung (104) gestapelt sind, durch einen Schieber (106) derart geschoben wird, dass er ausgegeben wird,
wobei der Schieber (106) aus Rollen (144L, 144R, 146L und 146R) ausgebildet ist und an einem Hebel (136) vorgesehen ist, der auf einem Bewegungskörper (110) drehbar gelagert ist, der durch ein Hin- und Herbewegungsmittel (109) veranlasst wird, dass er sich linear hin und her bewegt, und
wobei der Hebel (136) bei einem Bewegungsvorgang in Richtung zu einem Artikelauslass (294) in einer Schiebeposition (MP) gehalten ist und bewirkt, dass ein vorletzter Artikel (G2) bezüglich dem untersten Artikel (G) freigegeben wird,
**dadurch gekennzeichnet, dass** der Hebel (136) bei einem Bewegungsvorgang weg von dem Artikelauslass (294) in einer Halteposition (SP) gehalten wird, die näher zur Basis (278) der Artikelhaltevorrichtung (104) ist als die Schiebeposition (MP) .

2. Artikelausgabevorrichtung nach Anspruch 1, wobei der Hebel (136) durch einen bewegten Körper geschwenkt wird, der durch eine traverse Nockenwelle, die parallel zu den Führungsschienen (131A und 131U) angeordnet ist, zu einer Hin- und Herbewegung veranlasst wird, und durch Verbindungsmittel (112) mit einem Antriebshebel (208), der drehbar auf dem Bewegungskörper (110) montiert ist, auch verbindungs-gekoppelt ist.

3. Artikelausgabevorrichtung nach Anspruch 2, wobei die Verbindungskopplung durch ein bewegbares Einführen eines bewegten Stiftes (216), der mit dem Antriebshebel (208) integral ausgebildet ist, in eine genutete Schulter (212) erfolgt, die auf dem bewegten Körper ausgebildet ist, und die Verbindungskopplung durch ein bewegbares Einführen eines Antriebsstifts (214), der mit dem Antriebshebel (208) integral ausgebildet ist, in eine genutete Schulter (206) erfolgt, die auf dem Hebel ausgebildet ist.

4. Artikelausgabevorrichtung nach einem der vorhergehenden Ansprüche 1 bis 3, wobei ein Zwangsbewegungsmittel (244) auf einem Bewegungspfad des Hebels (136) ausgebildet ist, so dass es den Hebel (136) kontaktiert, um den Hebel (136) zu schieben und eine Bewegung des Hebels (136) in die Schiebeposition (MP) zu erzwingen.

5. Artikelausgabevorrichtung nach Anspruch 3, wobei der Antriebsstift (214) des Hebels (136) derart eingeführt ist, dass ein Verhältnis besteht, in dem der Antriebsstift (214) durch die genutete Schulter (206) gezogen wird.

6. Artikelausgabevorrichtung nach einem der vorhergehenden Ansprüche, wobei der Bewegungskörper (110) durch die Führungsschienen (131A und 131U) geführt wird, die auf der Basis (278) parallel zueinander ausgebildet sind, so dass er in der Lage ist, sich linear hin und her zu bewegen.

7. Artikelausgabevorrichtung nach einem der vorhergehenden Ansprüche, wobei der Hebel (136) bei einem Bewegungsvorgang in Richtung zu einem Artikelauslass (294) durch eine traverse Nockenvorrichtung (114), die parallel zu den Führungsschienen (131A und 131U) ausgebildet ist, in einer Schiebeposition (MP) gehalten ist und bewirkt, dass ein vorletzter Artikel (G2) bezüglich dem untersten Artikel (G) freigegeben wird.

8. Artikelausgabevorrichtung nach Anspruch 7, wobei die traverse Nockenvorrichtung (114) ein Paar traverser Nockenwellen beinhaltet, die auf einer gleichen Axiallinie angeordnet und mit einer gewöhnlichen Antriebsvorrichtung (116) gekoppelt sind, so dass sie dadurch angetrieben werden.

9. Artikelausgabevorrichtung nach Anspruch 8, wobei in einem Antriebsmechanismus zwischen der Antriebsvorrichtung (116) und jeder der traversen Nockenwellen Einwegkupplungen (204, 204-2) angeordnet sind, wobei sich die Einwegkupplungen (204, 204-2) in der Übertragungsdrehrichtung voneinander unterscheiden und die Antriebsvorrichtung (116) basierend auf einem ausgewählten Artikel wahlweise in eine Vorwärts- oder Rückwärtsrichtung gedreht wird.

## Revendications

1. Dispositif de distribution d'articles pour un distributeur automatique, le dispositif dans lequel une surface latérale d'un article (G) à distribuer le plus en bas parmi des articles empilés sur une base (278) d'un dispositif de support d'articles (104) est poussée par un poussoir (106),
le poussoir (106) étant formé de rouleaux (144L, 144R, 146L, et 146R) et étant pourvu à un levier (136) soutenu en rotation à un corps mobile (110) mis en mouvement alternatif linéaire par un moyen (109) à va et vient, et
le levier (136) étant maintenu au niveau d'une position de poussée (MP) dans un processus de déplacement vers une sortie (294) pour articles et amenant un article (G2) qui est deuxième du plus bas à flotter par rapport à l'article le plus en bas (G) **caractérisé en ce que** le levier (136) est maintenu au niveau d'une position d'attente (SP) plus proche de la base (278) du dispositif de support d'articles (104) que la position de poussée (MP) dans un processus d'éloignement de la sortie (294) pour articles.

2. Dispositif de distribution d'articles selon la revendication 1, dans lequel
le levier (136) est balancé par un corps déplacé qui est mis en mouvement de va et vient par le biais d'un arbre à came transversal disposé parallèle aux rails de guidage (131A et 131U), et est également couplé par raccordement par le biais de moyens de liaison (112) à un levier d'entraînement (208) monté en rotation sur le corps mobile (110) .

3. Dispositif de distribution d'articles selon la revendication 2, dans lequel
l'accouplement par raccordement est fait en insérant en mobilité une broche déplacée (216) formée solidaire sur le levier d'entraînement (208) dans une came rainurée (212) formée sur le corps déplacé et l'accouplement par raccordement est fait en insérant en mobilité une broche d'entraînement (214) formée solidaire sur le levier d'entraînement (208) dans une came rainurée (206) formée sur le levier.

4. Dispositif de distribution d'articles selon l'une quelconque des revendications précédentes 1 à 3, dans lequel
un moyen de mouvement forcé (244) est disposé sur un chemin de mouvement du levier (136) de manière à établir un contact avec le levier (136) pour pousser et déplacer de force le levier (136) vers la position de poussée (MP).

5. Dispositif de distribution d'articles selon la revendication 3, dans lequel la broche entraînée (214) du levier (136) est insérée de manière à adopter une relation dans laquelle la broche entraînée (214) est attirée par la came rainurée (206).

6. Dispositif de distribution d'articles selon l'une quelconque des revendications précédentes, dans lequel le corps mobile (110) est guidé par des rails de guidage (131A et 131U) disposés parallèles entre eux sur la base (278) de manière à pouvoir se déplacer en mouvement alternatif linéaire.

7. Dispositif de distribution d'articles selon l'une quelconque des revendications précédentes dans lequel le levier (136) qui est maintenu à une position de poussée (MP) par un dispositif à came (114) transversal disposé parallèlement aux rails de guidage (131A et 131U) dans un processus de déplacement vers une sortie (294) pour articles et amenant un article (G2) deuxième du plus bas à flotter par rapport à l'article le plus bas (G).

8. Dispositif de distribution d'articles selon la revendication 7, dans lequel le dispositif de came (114) transversal comporte une paire d'arbres à came-transversal qui sont disposés sur une même ligne axiale et sont couplés à un dispositif d'entraînement commun (116) de manière à être entraînés par ce dernier.

9. Dispositif de distribution d'articles selon la revendication 8, dans lequel des embrayages unidirectionnels (204, 204-2) sont disposés dans un mécanisme d'entraînement entre le dispositif d'entraînement (116) et chacun des arbres à came transversaux, les embrayages unidirectionnels (204, 204-2) sont différents en termes de direction de rotation de transfert, et le dispositif d'entraînement (116) est sélectivement mis en rotation dans une direction avant ou inverse selon un article sélectionné.
